# EUROPEAN PATENT APPLICATION

(11) **EP 3 557 339 A1**
(43) Date of publication of application: **23.10.2019**
(21) Application number: 17879895.5
(22) Date of filing: 12.12.2017
(51) Int. Cl.: G05B 15/02, G05B 19/418

(54) **LINKED CONTROL METHOD FOR INTERNET-OF-THINGS GATEWAY AND INTERNET-OF-THINGS GATEWAY**

(30) Priority: 15.12.2016 CN 201611161426
(71) Applicant: ZTE Corporation, Shenzhen, Guangdong 518057 (CN)
(72) Inventor: ZHU, Xiaosan, Shenzhen Guangdong 518057 (CN)
(74) Representative: Aipex B.V.
(86) International application number: PCT/CN2017/115719
(87) International publication number: WO 2018/108082

(57) **Abstract**

Provided are a linkage control method for an Internet of Things gateway and an Internet of Things gateway. The method includes: determining attribute information of a first channel of a first device connected to the IOT gateway; determining whether the attribute information of the first channel satisfies a trigger condition in a preset linkage rule, where the trigger condition is used for determining whether to execute an action corresponding to the trigger condition in the preset linkage rule; if the attribute information of the first channel satisfies the trigger condition, determining, according to the preset linkage rule, attribute information of a second channel corresponding to the first channel, where the second channel includes a second channel in the first device or a second channel of a second device; and controlling the first device or the second device determined according to the attribute information of the second channel to execute the action corresponding to the trigger condition.

## Description

### TECHNICAL FIELD

The present invention relates to Internet of Things technologies and for example, relates to a linkage control method executed by an Internet of Things gateway and an Internet of Things gateway.

### BACKGROUND

As an important part of the new generation of information technology, the Internet of Things is widely applied to network convergence through communication sensing technologies such as smart sensing, identification technology and ubiquitous computing, and is also called the third wave of development of the world information industry after computers and the internet. As the "heart" of the Internet of things, the Internet of things gateway plays a very important role in the era of the Internet of things, and is a link for connecting a sensing network and a traditional communication network. As a gateway device, the Internet of things gateway can achieve protocol conversion between the sensing network and the communication network and between different types of sensing networks. The Internet of things gateway not only can implement wide area interconnection, but also can implement local area interconnection. In addition, the Internet of Things gateway also needs to have a device management function. The operator can manage each underlay sensing node, know relevant information of each node and achieve remote control through the gateway device of the Internet of Things. The functions of acquisition, information input, information output, centralized control, remote control, linkage control of the system information and the like are implemented through the gateway.

Linkage control is that after one device is triggered by a certain event, the internet of things gateway is notified, and the Internet of Things gateway controls other devices according to the trigger event of the device. For example, when data of the temperature sensor in the room is higher than 28 degrees, a notification message is sent to the Internet of Things gateway, and the Internet of Things gateway controls the air conditioner to start.

The linkage control function of the Internet of things gateway can be implemented in the following manners:
In the first manner, the linkage control rule is locally implemented, and the implementation is limited to one sensor network. For example, a gateway in the related art implements association control between sensors in a Zigbee network based on a binding function of a Zigbee protocol home automation (HA) network.

In the second manner, the linkage control rule is locally implemented, and the association control among different devices in heterogeneous networks can be achieved, but the codes are implemented completely in a customization manner, the linkage rule is generally determined after leaving the factory, and the users cannot modify the linkage rule according to their own requirements.

The linkage control method in the related art has the drawbacks described as follows. In the first manner, the implementation of the linkage control is restricted one same network, so that the linkage control function is limited and the device linkage across networks cannot be supported, for example, the association control of an air conditioner supporting a wireless-fidelity (Wi-Fi) network and an infrared sensor supporting a Zigbee network cannot be achieved. In the second manner, the codes are customized and the user cannot design the rule by himself, so that the user experience is poor and the follow-up maintenance cost of the project is high.

### SUMMARY

The present invention provides a linkage control method executed by an Internet of Things gateway, an Internet of Things gateway and a control terminal, which can not only achieve the linkage control of different channels of the same device and linkage control of different channels of different devices in the same network, but also achieve the linkage control of different channels of different devices in various heterogeneous networks.

The present invention provides a linkage control method executed by an Internet of Things gateway. The method includes:
determining attribute information of a first channel of a first device connected to an Internet of Things gateway;
determining whether the attribute information of the first channel satisfies a trigger condition in a preset linkage rule;
when the attribute information of the first channel satisfies the trigger condition, determining attribute information of a second channel corresponding to the first channel according to the preset linkage rule, where the second channel includes a second channel in the first device or a second channel of a second device; and
controlling the first device or the second device determined according to the attribute information of the second channel to execute an action corresponding to the trigger condition.

Alternatively, the step of controlling the first device or the second device determined according to the attribute information of the second channel to execute the action corresponding to the trigger condition includes:
determining, according to the attribute information of the second channel, a control instruction of executing the action; and
transmitting the control instruction to the first device or the second device corresponding to the second channel so that the control instruction is executed.

The trigger condition is used for determining whether to execute the action corresponding to the trigger condition in the preset linkage rule.

Alternatively, before the step of determining the attribute information of the first channel of the first device connected to the Internet of Things gateway, the method further includes:
receiving first data transmitted by the first device connected to the Internet of Things gateway; and
converting the first data to second data according to a predefined data structure format, where the second data at least includes the attribute information of the first channel of the first device.

Alternatively, the second data further includes device attribute information of the first device; and the step of determining whether the attribute information of the first channel satisfies the trigger condition in the preset linkage rule includes:
determining whether the device attribute information matches device attribute information in the trigger condition; and
in a case of the device attribute information matching the device attribute information in the trigger condition, determining whether the attribute information of the first channel matches channel attribute information in the trigger condition.

Alternatively, the device attribute information at least includes a device identification sequence number, and the step of determining whether the device attribute information matches the device attribute information in the trigger condition includes:
determining whether the device identification sequence number in the device attribute information is the same as a device identification sequence number in the trigger condition.

Alternatively, the attribute information of the first channel at least includes a channel sequence number and channel data, and the step of determining whether the attribute information of the first channel matches the channel attribute information in the trigger condition includes:
determining whether the channel sequence number in the attribute information of the first channel is the same as a channel sequence number in the trigger condition; and
when the channel sequence number in the attribute information of the first channel is the same as the channel sequence number in the trigger condition, determining whether the channel data in the attribute information of the first channel matches preset data in the trigger condition, where when the channel data in the attribute information of the first channel in the second data matches the preset data in the trigger condition, it is indicated that the attribute information of the first channel in the second data matches the trigger condition.

Alternatively, before the step of receiving the first data transmitted by the first device connected to the Internet of Things gateway, the method further includes:
obtaining device information of each device connected to the Internet of Things gateway;
receiving a first operation and a second operation performed by a user based on the device information, where the first operation is used for determining the channel sequence number of the first channel and channel data of the first channel and the second operation is used for determining the channel sequence number of the second channel and channel data of the second channel;
determining the trigger condition according to the channel sequence number of the first channel and the channel data of the first channel;
determining the action according to the channel sequence number of the second channel and the channel data of the second channel; and
associating the trigger condition and the action to obtain the linkage rule.

Alternatively, the method further includes:
obtaining the linkage rule, which includes the trigger condition and the action corresponding to the trigger condition; and
storing the linkage rule in a linkage rule table.

The present invention further provides an Internet of Things gateway. The gateway includes a first determination module, a first determining module, a second determination module and a performing module.

The first determination module is configured to determine attribute information of a first channel of a first device connected to the Internet of Things gateway.

The first determining module is configured to determine whether the attribute information of the first channel satisfies a trigger condition in a preset linkage rule.

The second determination module is configured to: when the attribute information of the first channel satisfies the trigger condition, determine attribute information of a second channel corresponding to the first channel according to the preset linkage rule. The second channel includes a second channel in the first device or a second channel of a second device.

The performing module is configured to control the first device or the second device determined according to the attribute information of the second channel to execute an action corresponding to the trigger condition.

Alternatively, the performing module includes a first determination unit and a transmission unit.

The first determination unit is configured to determine, according to the attribute information of the second channel, a control instruction for performing the linkage action.

The transmission unit is configured to transmit the control instruction to the first device or the second device corresponding to the second channel.

The trigger condition is used for determining whether to execute the action corresponding to the trigger condition in the preset linkage rule.

Alternatively, the Internet of Things gateway further includes a first reception module and a conversion module.

The first reception module is configured to: before the step of determining the attribute information of the first channel of the first device connected to the Internet of Things gateway, receive first data transmitted by the first device connected to the Internet of Things gateway.

The conversion module is configured to convert the first data to second data according to a predefined data structure format. The second data at least includes the attribute information of the first channel of the first device.

Alternatively, the second data further includes device attribute information of the first device, and the first determining module includes a first determining unit and a second determining unit.

The first determining unit is configured to determine whether the device attribute information matches device attribute information in the trigger condition.

The second determining unit is configured to: when the device attribute information matches the trigger condition, determine whether the attribute information of the first channel matches channel attribute information in the trigger condition.

Alternatively, the device attribute information at least includes a device identification sequence number, and the first determining unit includes a first determining sub-unit.

The first determining sub-unit is configured to determine whether the device identification sequence number in the device attribute information is the same as a device identification sequence number in the trigger condition.

Alternatively, the attribute information of the first channel at least includes a channel sequence number and channel data, and the second determining unit includes a second determining sub-unit and a third determining sub-unit.

The second determining sub-unit is configured to determine whether the channel sequence number in the attribute information of the first channel is the same as a channel sequence number in the trigger condition.

The third determining sub-unit is configured to: when the channel sequence number in the attribute information of the first channel is the same as the channel sequence number in the trigger condition, determine whether the channel data in the attribute information of the first channel matches preset data in the trigger condition. When the channel data in the attribute information of the first channel in the second data matches the preset data in the trigger condition, it is indicated that the attribute information of the first channel in the second data matches the trigger condition.

Alternatively, the Internet of Things gateway further includes a first obtaining module, a second reception module, a fourth determination module, a fifth determination module and an association module.

The first obtaining module is configured to: before the step of receiving the first data transmitted by the first device connected to the Internet of Things gateway, obtain device information of each device connected to the Internet of Things gateway.

The second reception module is configured to receive a first operation and a second operation performed by a user based on the device information. The first operation is used for determining a channel sequence number of the first channel and channel data of the first channel, and the second operation is used for determining a channel sequence number of the second channel and channel data of the second channel.

The fourth determination module is configured to determine the trigger condition according to the channel sequence number of the first channel and the channel data of the first channel.

The fifth determination module is configured to determine the action according to the channel sequence number of the second channel and the channel data of the second channel.

The association module is configured to associate the trigger condition and the action to obtain the linkage rule.

Alternatively, the Internet of Things gateway further includes a second obtaining module and a storage module.

The second obtaining module is configured to obtain the linkage rule. The linkage rule includes the trigger condition and the action corresponding to the trigger condition.

The storage module is configured to store the linkage rule in a linkage rule table.

The present invention further provides a computer-readable storage medium, which is configured to store computer-executable instructions for executing the method described above.

The present invention further provides an Internet of Things gateway. The Internet of Things gateway includes one or more processors, a memory, and one or more programs stored in the memory. When executed by the one or more processors, the one or more programs execute the method described above.

The present invention further provides a computer program product including a computer program stored in a non-transient computer-readable storage medium. The computer program includes program instructions which, when executed by a computer, enable the computer to execute any method described above.

The embodiments of the present invention provide the linkage control method executed by an Internet of Things gateway and an Internet of Things gateway. The attribute information of the first channel of the first device connected to the Internet of Things gateway is determined. Then it is determined whether the attribute information of the first channel satisfies the trigger condition in the preset linkage rule. When the attribute information of the first channel satisfies the trigger condition, the attribute information of the second channel corresponding to the first channel is determined according to the preset linkage rule, and the first device or the second device determined according to the attribute information of the second channel is controlled to execute the action corresponding to the trigger condition. The method not only can achieve the linkage control of different channels of the same device and the linkage control of the input channel and output channel of different devices in the same network, but also can achieve the linkage control of the input channel and output channel of different devices in various heterogeneous networks.

### BRIEF DESCRIPTION OF DRAWINGS

FIG. 1A is a schematic diagram illustrating an implementation flow of a linkage control method for an Internet of Things gateway according to an embodiment 1;
FIG. 1B is a schematic diagram illustrating an implementation flow of linkage control of an Internet of Things gateway according to the embodiment 1;
FIG. 2 is a schematic diagram illustrating an implementation flow of a linkage control method for an Internet of Things gateway according to an embodiment 2;
FIG. 3 is a schematic diagram of a device model according to an embodiment 3;
FIG. 4A is a structural diagram of a linkage control system of an Internet of Things gateway according to an embodiment 4;
FIG. 4B is a schematic diagram illustrating an execution flow of a linkage control service sub-module according to the embodiment 4;
FIG. 5 is a structural diagram of a linkage control system of an Internet of Things gateway according to an embodiment 5;
FIG. 6 is a structural diagram of a linkage control system of an Internet of Things gateway according to an embodiment 6;
FIG. 7 is a structural diagram of an Internet of Things gateway according to an embodiment 7;
FIG. 8 is a structural diagram of a performing module 740 in FIG. 7;
FIG. 9 is a structural diagram of another Internet of Things gateway according to the embodiment 7;
FIG. 10 is a structural diagram of a first determining module 720 in FIG. 7;
FIG. 11 is a structural diagram of another Internet of Things gateway according to the embodiment 7;
FIG. 12 is a structural diagram of another Internet of Things gateway according to the embodiment 7; and
FIG. 13 is a structural diagram of hardware of an Internet of Things gateway according to an embodiment 8.

### DETAILED DESCRIPTION

### Embodiment 1

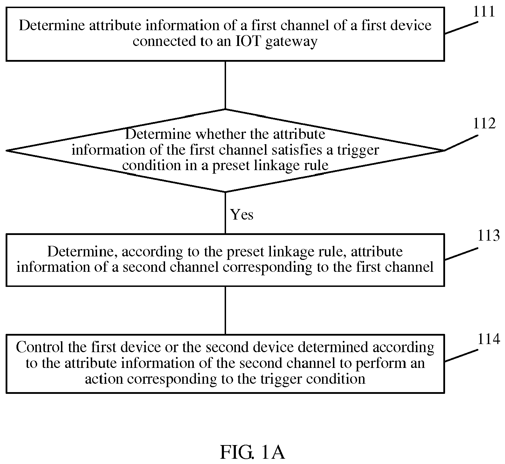

In order to solve the technical problem described in the Background, the embodiments of the present application provide a linkage control method for an Internet of Things gateway. The method is applied to an Internet of Things gateway linkage control system. The Internet of Things gateway linkage control system at least includes an Internet of Things gateway, at least one device connected to the Internet of Things gateway, and a control terminal. FIG. 1A is a schematic diagram illustrating an implementation flow of a linkage control method for an Internet of Things gateway according to the embodiment 1. As shown in FIG. 1A, the method includes the steps described below.

In a step 111, an Internet of Things gateway determines attribute information of a first channel of a first device connected to the Internet of Things gateway.

The attribute information of the first channel of the first device includes at least a channel sequence number and channel data.

In a step 112, the Internet of Things gateway determines whether the attribute information of the first channel satisfies a trigger condition in a preset linkage rule.

The preset linkage rule includes the trigger condition and an action corresponding to the trigger condition. The trigger condition is used for determining whether to execute the action corresponding to the trigger condition in the preset linkage rule.

If the attribute information of the first channel satisfies the trigger condition in the preset linkage rule, the process proceeds to a step 113. If the attribute information of the first channel does not satisfy the trigger condition in the preset linkage rule, the process ends.

In the step 113, the Internet of Things gateway determines, according to the preset linkage rule, attribute information of a second channel corresponding to the first channel.

The second channel may be a second channel in the first device or a second channel of a second device. The first device and the second device may be different devices in the same network, or may be different devices in the heterogeneous networks.

In a step 114, the Internet of Things gateway controls the first device or the second device determined according to the attribute information of the second channel to execute the action corresponding to the trigger condition.

Alternatively, the Internet of Things gateway determines, according to the attribute information of the second channel, a control instruction of the action, and transmits the control instruction to the first device or the second device corresponding to the second channel so as to control the first device or the second device to execute the action corresponding to the trigger condition.

In other embodiments of the present application, before the step 111, the method described above may further include the steps described below.

In a step A1, the Internet of Things gateway receives first data transmitted by the first device connected to the Internet of Things gateway.

In a step A2, the Internet of Things gateway converts the first data into second data according to a predefined data structure format.

The second data at least includes device attribute information of the first device and the attribute information of the first channel. The device attribute information at least includes a device identification sequence number. The attribute information of the first channel at least includes a channel sequence number, a channel type and channel data. The channel type at least includes an analog input channel, a digital input channel, an analog output channel, and a digital output channel.

The received first data transmitted by different devices in the heterogeneous networks is normalized and converted into by the Internet of Things gateway, and the second data is in a predefined unified data structure format. Thus, different devices in the heterogeneous networks can communicate with each other through the Internet of Things gateway.

After the Internet of Things gateway obtains the second data, correspondingly, the step 111 may include that the Internet of Things gateway determines, according to the second data, the attribute information of the first channel of the first device connected to the Internet of Things gateway.

Alternatively, when the device attribute information of the first device and the attribute information of the first channel in the second data match the trigger condition, the Internet of Things gateway creates an action execution thread, and executes the action corresponding to the trigger condition in the action execution thread. In the case where for multiple devices' second data, the device attribute information of the first device and the attribute information of the first channel simultaneously match other trigger condition in the linkage rule, the Internet of Things gateway creates multiple action execution threads simultaneously and executes the corresponding joint actions concurrently. In this way, the real-time property of joint control is ensured.

The device corresponding to the trigger condition and the device corresponding to the action may be the same device or different devices. Different devices here may be different devices in the same type of network, or may also be different devices in different types of networks.

In other embodiments of the present application, the second data further includes the device attribute information of the first device, after the Internet of Things gateway determines the attribute information of the first channel of the first device connected to the Internet of Things gateway, the method described above may further include the step described below.

In a step B1, the Internet of Things gateway determines whether the device attribute information of the first device matches the device attribute information in the trigger condition.

When the device attribute information does not match the trigger condition, the process ends; and when the device attribute information matches the trigger condition, the process proceeds to a step B2.

Alternatively, the device attribute information includes at least a device identification sequence number, and correspondingly, the process that the Internet of Things gateway determines whether the device attribute information matches the device attribute information in the trigger condition is the Internet of Things gateway determines whether the device identification sequence number in the device attribute information is the same as the device identification number in the trigger condition. If the device identification sequence number in the device attribute information is the same as the device identification number in the trigger condition, it is indicated that the device attribute information matches the trigger condition. If the device identification sequence number in the device attribute information is not the same as the device identification number in the trigger condition, it is indicated that the device attribute information does not match the trigger condition.

In a step B2, the Internet of Things gateway determines whether the attribute information of the first channel matches the channel attribute information in the trigger condition.

If the attribute information of the first channel matches the channel attribute information in the trigger condition, the process proceeds to the step 112; and if the attribute information of the first channel does not match the channel attribute information in the trigger condition, the process ends.

Alternatively, the attribute information of the first channel at least includes a channel sequence number and channel data. Correspondingly, the process that the Internet of Things gateway determines whether the attribute information of the first channel matches the channel attribute information in the trigger condition includes: when the device identification sequence number in the device attribute information is the same as the device identification number in the trigger condition, the Internet of Things gateway determines whether the channel sequence number in the attribute information of the first channel is the same as a channel sequence number in the trigger condition. When the channel sequence number in the attribute information of the first channel is the same as the channel sequence number in the trigger condition, the Internet of Things gateway determines whether the channel data in the attribute information of the first channel matches preset data in the trigger condition. When the channel data in the attribute information of the first channel in the second data matches the preset data in the trigger condition, it indicates that the attribute information of the first channel in the second data matches the trigger condition.

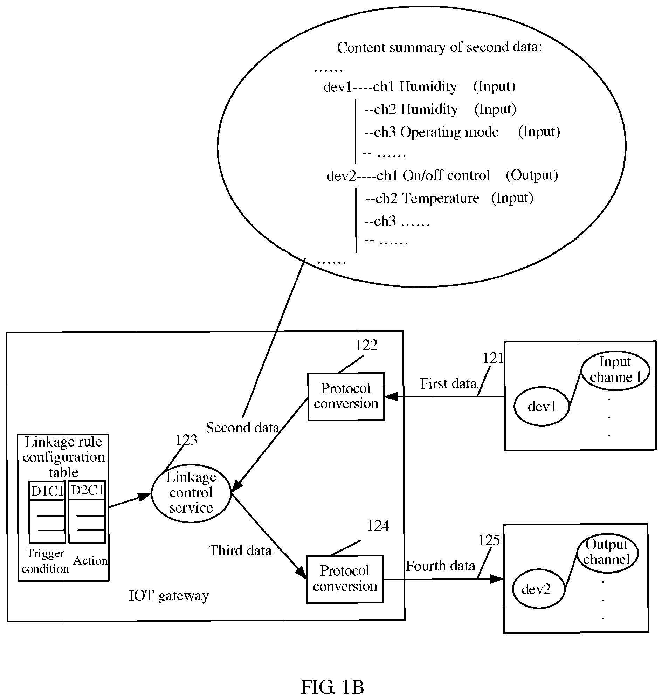

FIG. 1B is a schematic diagram illustrating an implementation flow of the linkage control method for the Internet of Things gateway according to the embodiment 1. As shown in FIG. 1B, the method includes the steps described below.

In a step 121, a device 1 transmits first data to the Internet of Things gateway.

In a step 122, the Internet of Things gateway performs protocol conversion on the first data to obtain second data.

In a step 123, the Internet of Things gateway matches the second data with the trigger condition in a linkage rule configuration table. When the second data is successfully matched with the trigger condition (D1C1) in the linkage rule configuration table, the Internet of Things gateway determines the action (D2C1) corresponding to the trigger condition and third data representing the action.

In a step 124, the Internet of Things gateway converts the third data representing the action to obtain fourth data.

In a step 125, the Internet of Things gateway transmits the fourth data to a device 2.

In FIG. 1B, dev1 and dev2 denote device identification sequence numbers, ch1, ch2 and ch3 denote channel sequence numbers, input and output denote channel types, and humidity, an operating mode, on/off control, and temperature denote channel data. The data format of the first data and the data format of the fourth data are original data formats configured by the manufacturer, and the data format of the second data and the third data is the unified data format normalized by the Internet of Things gateway.

In the linkage control method for the Internet of Things gateway provided in the embodiment of the present application, the attribute information of the first channel of the first device connected to the Internet of Things gateway is first determined. When the attribute information of the first channel matches the channel attribute information in the preset trigger condition, the attribute information of the second channel corresponding to the first channel is determined according to a preset linkage rule. The second channel is a second channel in the first device or a second channel of the second device. The control instruction determined according to the attribute information of the second channel is transmitted to the first device or the second device corresponding to the second channel. Since the first device and the second device may be different devices in the same network, or may be different devices in heterogeneous networks, the linkage control method for the the Internet of Things gateway provided in the embodiment of the present application can not only achieve the linkage control between different channels of the same device and between input and output channels of different devices in the same network, but also achieve the linkage control between input and output channels of different devices in various heterogeneous networks.

### Embodiment 2

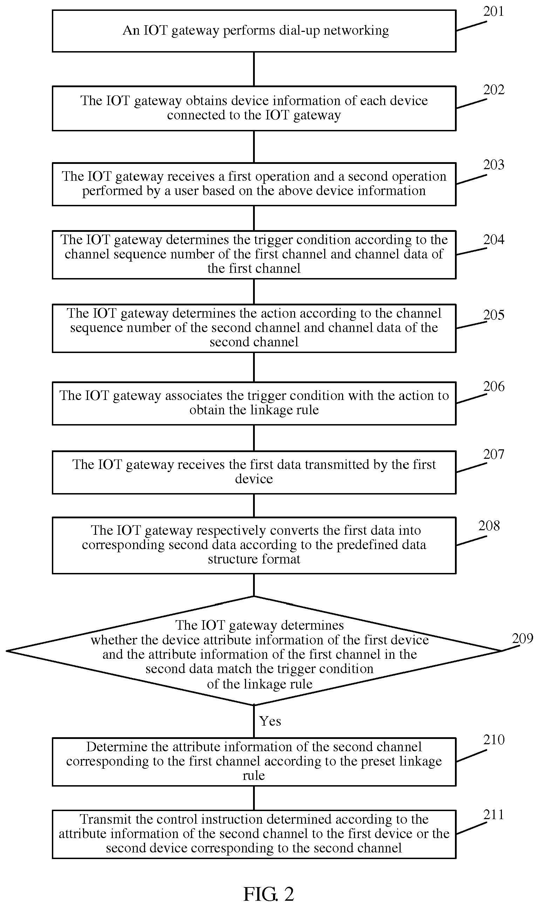

Based on the foregoing embodiment, the present embodiment of the application provides another linkage control method for an Internet of Things gateway. The method is applied to a an Internet of Things gateway linkage control system. The Internet of Things gateway linkage control system at least includes an Internet of Things gateway, a control terminal and devices connected to the Internet of Things gateway. FIG. 2 is a schematic diagram illustrating an implementation flow of a linkage control method for an Internet of Things gateway according to the embodiment 2. As shown in FIG. 2, the method includes the steps described below.

In a step 201, a user turns on the power switch of the Internet of Things gateway, and the Internet of Things gateway performs a dial-up networking process.

Here, a registration process, a login process, and the like are performed between the Internet of Things gateway and the cloud server, and finally the Internet of Things gateway is connected to the cloud server. For example, the user turns on the control terminal and runs a smart home application (APP) on the control terminal, and the control terminal initiates a login process to establish connection with the Internet of Things gateway. The control terminal may be a mobile phone, a tablet computer, a laptop, or the like.

The user turns on the power of the device, performs a network access operation on the device, and establishes connection between the device and the Internet of Things gateway. Here, the device may be a home appliance device, a sensor, or the like. The device includes a first device. The user performs the network access operation on the home appliance or sensor according to the network access operation prompts of the device, so that the home appliance or sensor is communicably connected to the Internet of Things gateway.

The device transmits its own device information to the Internet of Things gateway. Here, the device information includes information such as a device number, a device type, and a media access control (MAC) address.

In a step 202, the Internet of Things gateway obtains device information of each device connected to the Internet of Things gateway.

Here, the Internet of Things gateway receives device information of each device connected to the Internet of Things gateway itself. For each device, the Internet of Things gateway converts the device information of the device according to a predefined data structure format to obtain second device information. The second device information of each device at least includes attribute information of the first channel of the device.

In a step 203, a first operation and a second operation performed by a user based on the above device information are received.

Here, the first operation is used for determining a channel sequence number of the first channel and channel data of the first channel, and the second operation is used for determining a channel sequence number of the second channel and channel data of the second channel.

In a step 204, the trigger condition is determined according to the channel sequence number of the first channel and the channel data of the first channel.

In a step 205, the action is determined according to the channel sequence number of the second channel and the channel data of the second channel.

In a step 206, the trigger condition and the action are associated to obtain the linkage rule.

Here, the step 203, the step 204, the step 205, and the step 206 may be implemented by the Internet of Things gateway, or may be implemented by the control terminal. If the step 203, the step 204, the step 205, and the step 206 are implemented by the Internet of Things gateway, the Internet of Things gateway has an interface for detecting the user operation. The interface may be a touch display screen.

If the step 203, the step 204, the step 205, and the step 206 are implemented by the control terminal, before the step 203, the Internet of Things gateway transmits the device information of each device to the control terminal, the user performs operation according to the device information displayed in the control terminal, and the control terminal obtains the linkage rule based on the first operation and the second operation of the user and transmits the linkage rule to the Internet of Things gateway.

In the embodiment of the present application, the user may freely set the trigger condition and the action on the control terminal or the Internet of Things gateway according to actual needs. Therefore, the linkage control method for an Internet of Things gateway provided in the embodiment of the present application has good universality and practicality.

In a step 207, the Internet of Things gateway receives the first data transmitted by the first devices.

In a step 208, the Internet of Things gateway respectively converts the first data according to the predefined data structure format to obtain corresponding second data.

The second data at least includes device attribute information of the first device and the attribute information of the first channel. The device attribute information of the first device at least includes a device identification sequence number. The attribute information of the first channel at least includes a channel sequence number, a channel type and channel data. The channel type at least includes an analog input channel, a digital input channel, an analog output channel, and a digital output channel.

In a step 209, the Internet of Things gateway determines whether the device attribute information of the first device and the attribute information of the first channel in the second data match the trigger condition of the linkage rule.

The above linkage rule includes the trigger condition and the action corresponding to the trigger condition.

The step 209 may include determining whether the device identification sequence number in the device attribute information of the first device in the second data is the same as a device identification sequence number in the trigger condition.

When the device identification sequence number in the device attribute information is the same as the device identification sequence number in the trigger condition, it is determined whether the channel sequence number in the attribute information of the first channel is the same as a channel sequence number in the trigger condition.

When the channel sequence number in the attribute information of the first channel is the same as the channel sequence number in the trigger condition, it is determined whether the channel data in the attribute information of the first channel matches preset data in the trigger condition. When the channel data in the attribute information of the first channel in the second data matches the preset data in the trigger condition, it is indicated that the attribute information of the first channel in the second data matches the trigger condition.

In a step 210, when the attribute information of the first channel matches the channel attribute information in the preset trigger condition, the attribute information of the second channel corresponding to the first channel is determined according to the preset linkage rule.

The second channel may be a second channel in the first device or a second channel of a second device.

In a step 211, the control instruction determined according to the attribute information of the second channel is transmitted to the first device or the second device corresponding to the second channel.

The action corresponding to the trigger condition is performed according to the attribute information of the second channel. The action includes transmitting the control instruction determined according to the attribute information of the second channel to the first device or the second device corresponding to the second channel.

When the device attribute information of the first device and the attribute information of the first channel in the second data match the trigger condition, the Internet of Things gateway creates an action execution thread, and performs the action corresponding to the trigger condition in the action execution thread. In the case where for multiple devices' second data, the device attribute information of the first device and the attribute information of the first channel match other trigger condition in the linkage rule, the Internet of Things gateway creates multiple action execution threads simultaneously and executes the corresponding joint actions concurrently. In this way, the real-time property of joint control is ensured.

### Embodiment 3

The embodiment of the present application further provides a linkage control method for an Internet of Things gateway, and the method is applied to an Internet of Things gateway linkage control system. The method includes the steps described below.

In step 1: device modeling is performed.

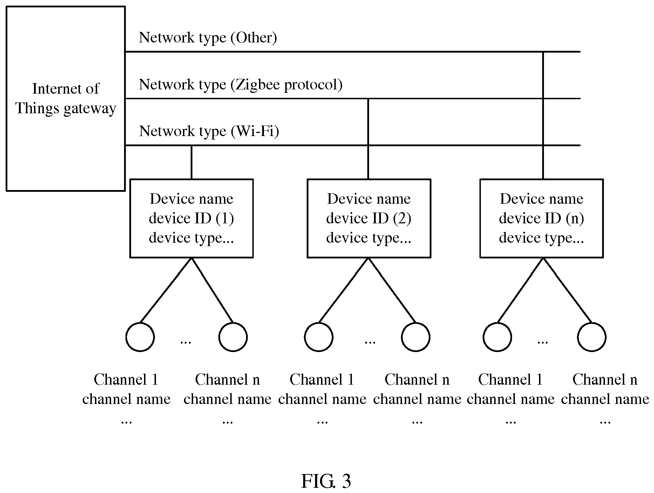

Any terminal, such as a field to-be-monitored device, a sensor, or an actuator, in the Internet of Things industry may be abstracted as a device that includes two attributes, a device attribute and a channel attribute, such as the device model shown in FIG. 3. The device attribute includes a device name, device identification (ID), a device type, a device address, a device description, and the like. The channel attribute includes channel identification, a channel name, a channel type, channel data, and the like. For example, for an air box device, the device attribute of the device includes a device name, device ID, a device type (for example, 1400d001 represents the air box), a MAC address, manufacturer description, and the like. The channel name in the channel attribute of the device includes indoor temperature, indoor humidity, an indoor fine particulate matter 2.5 (PM2.5) value, an indoor formaldehyde content, an indoor volatile organic compounds (VOC) content and the like.

The channel may be classified into an input channel and an output channel. The input channel may be classified into an analog input channel and a digital input channel, and the output channel may be classified into an analog output channel and a digital output channel. Therefore, the channel type includes analog input (AI), digital input (DI), multi-state input (MSI), analog output (AO), digital output (DO), multi-state output (MSO), and the like. For example, for a two-in-one temperature and humidity sensor, it may be defined that a channel 1 is for temperature and its type is AI, and a channel 2 is for humidity and its type is AI.

In step 2: data structures of protocols of devices in the heterogeneous networks are normalized.

The protocol standards and data formats supported by the various devices or sensors in the heterogeneous networks in the field are not uniform, but can be uniformly normalized into a set of structured data structures by a protocol conversion unit according to defined device models, and are stored and managed according to device attributes and channel attributes.

In step 3: a gateway functional module is constructed.

The Internet of Things gateway in the embodiment of the present application mainly includes a device access unit, a data processing unit, and a cloud adaptation unit. The device access unit includes different protocol conversion modules and can implement normalization of protocol data formats of different network and devices. The data processing unit performs functions such as real-time data acquisition and analysis, real-time control, linkage control, historical data storage, and configuration management. The cloud adaptation unit implements a function of data interaction between the Internet of Things gateway and the cloud server.

In step 4: the device type is configured and online devices are connected to the network.

When the Internet of Things gateway performs version building, a list of device types supported by the system may be set in advance as a configuration file, or the configuration file is upgraded and replaced online during system operation.

After normal power-on and normal network access of various devices in the heterogeneous networks, the device access unit of the Internet of Things gateway allocates a logical device sequence number to each device that accesses the network for subsequent communication and device management.

In step 5: device linkage control policy is configured and execution flow is executed.

The linkage rule is configured through a user interface (UI) control terminal. The linkage rule configuration information mainly includes a trigger condition and an action. The trigger condition supports the selection of a state variation (or an alarm volume) of any input channel of any device, and the action supports the selection of an action of any output channel of any device (the configuration of selection of multiple action may be supported). The linkage rule is synchronously sent by the UI control terminal to the Internet of Things gateway according to the communication protocol agreed between the UI control terminal and the Internet of Things gateway, and is stored by the Internet of Things gateway in its memory and the database. When the linkage control service sub-module of the data processing unit receives the alarm event or the device state change event, the trigger conditions in the linkage rule table in the memory are traversed. When the alarm event or the device state change event matches a trigger condition in the linkage rule table, the linkage control service sub-module creates an action execution thread for execution, control and processing of the corresponding action sequence. The linkage control service sub-module uses mechanisms such as asynchronous event triggering and thread pool concurrent processing to ensure real-time property of the system linkage control.

The embodiment of the present application can implement local association control across field heterogeneous network devices, and guarantee real-time property of system linkage control because the linkage control service sub-module uses mechanisms such as asynchronous event triggering and thread pool concurrent processing. Therefore, the embodiment of the present application is also applicable to a working condition control occasion having high requirements on real-time control.

### Embodiment 4

The embodiment of the present application further provides a linkage control method for an Internet of Things gateway. The embodiment first describes an Internet of Things gateway linkage control system framework, a process of establishing communication connection between a control terminal and the Internet of Things gateway, a process of establishing communication connection between a device and the Internet of Things gateway, configuration of a linkage control rule, and execution of the linkage control rule, and then describes the implementation flow of the linkage control method for an Internet of Things gateway in conjunction with the actual use scenario.

### 1. Description of the framework of the Internet of Things gateway linkage control system

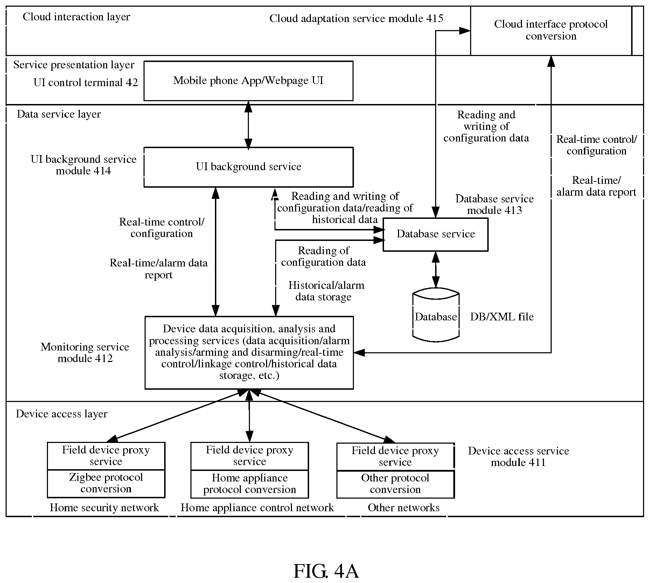

The framework of the Internet of Things gateway linkage control system is as shown in FIG. 4A. The Internet of Things gateway linkage control system at least includes an Internet of Things gateway 41 and a UI control terminal 42. The Internet of Things gateway 41 includes a device access service module 411, a monitoring service module 412, a database service module 413, a UI background service module 414 and a cloud adaptation service module 415.

The device access service module 411 is configured to implement network device addition control and device information acquisition of different network devices in the field.

The monitoring service module 412 is configured to analyze, store and process real-time device data acquired in the field, and meanwhile implements smart control of the device in the field. The monitoring service module 412 includes an alarm analysis sub-module, a real-time control sub-module, an arming and disarming management sub-module, a linkage control service sub-module, and the like.

The alarm analysis sub-module is configured to perform alarm analysis on the real-time data received by the Internet of Things gateway to obtain an analysis result. When the analysis result indicates that the real-time data received by the Internet of Things is an alarm trigger event, the received data is transmitted to the linkage control service sub-module.

The real-time control sub-module is configured to perform analysis on the real-time data received by the Internet of Things gateway to obtain an analysis result. When the analysis result indicates that the real-time data received by the Internet of Things is a device state change event, the received data is transmitted to the linkage control service sub-module.

The arming and disarming management sub-module is configured to perform arming and disarming management.

The linkage control service sub-module is configured to receive the trigger event transmitted by the real-time control sub-module and the alarm analysis sub-module, and determine whether the received trigger event matches the trigger condition in the linkage rule table. When the received trigger event matches the trigger condition in the linkage rule table, the linkage control service sub-module creates an action execution thread and executes corresponding action in the action execution thread.

The database service module 413 is configured to implement the management of the historical data and the configuration data, and provide a service for the client application. The service includes reading and writing of the device historical status data, the historical alarm data, the device configuration data and the like, as well as security, concurrent access control and other services.

The UI background service module 414 is configured to receive query, configuration, and control instructions and data transmitted by the UI control terminal, and implement data interaction with the monitoring service module and the database service module. At the same time, the UI background service module receives in real time alarm data from the monitoring service module e and sends the alarm data to the UI control terminal.

The cloud adaptation service module 415 is configured to provide a publishing service of local data for the cloud server, and perform data interaction with the cloud server according to a certain communication protocol format.

The UI control terminal 42 is configured to implement configuration of the linkage rule, transmits the linkage rule to the UI background service module, and receives the alarm data transmitted by the UI background service module.

### 2. Description of establishing communication connection between the UI control terminal and the Internet of Things gateway

The UI control terminal first initiates a login process via an internal network or an external network, and establishes connection with the Internet of Things gateway after the authentication is passed.

### 3. Description of establishing communication connection between the device and the Internet of Things gateway

The process includes device network access, discovery, registration, connection establishment, and the like.

Different network devices or sensors need to access the network according to their own network characteristics, such as pairing and binding of network devices in a certain form of user interaction. After the device is connected to the network, the Internet of Things gateway initiates a discovery flow, obtains device information to register the device, and allocates a logical device sequence number to each network-accessed device for subsequent communication and device management.

### 4. Description of a configuration process of the linkage control rule

The configuration path of the linkage control involves the UI control terminal, the UI background service module of the data processing unit, and the database service module. The configuration content of the linkage control involves a user-defined alarm module of the UI control terminal, a linkage rule configuration module, and the like.

The configuration principle of the linkage control rule is to associate and bind the change data of the specified input channel of the specified device with the action of the specified output channel of the specified device. The specified input channel may be divided into an AI channel and a DI channel, and the specified output channel may be divided into an AO channel and a DO channel. That is, the AI channel or the DI channel of the specified device may be bound to the AO channel or the DO channel of the specified device. For example, for an application scenario of "Door Open Light On", when the state of the DI channel of the door's magnetic sensor, which is used for representing the door opening/closing, is changed from 0 to 1 (that is, the door is opened), this change may be configured as a trigger condition of the linkage rule, and then the output state of the DO channel of the smart lamp which is used for representing on/off of the lamp is configured as 1 (i.e., a high level, indicating that light is on) when the trigger condition is satisfied.

The configuration of the linkage control rule includes configuration of the trigger condition and configuration of the action. The trigger condition configuration information includes a device sequence number, a channel sequence number, a channel type, and channel data. The configuration of the trigger condition is further divided into AI trigger condition configuration and DI trigger condition configuration according to different channel types. When the channel type is the AI trigger condition, it may be configured that the trigger condition is whether the current value of the selected channel exceeds the analog upper limit threshold or is lower than the analog lower limit threshold (e.g., the trigger condition is a temperature sensor detects that the temperature exceeds the upper limit of 60 degrees Celsius). When the channel type is the DI trigger condition, it is configured that the trigger condition is whether the current value of the channel is 1 or 0 (Note: the meaning of the numeral 1 or 0 has been defined in the device type configuration file, for example, the door's magnetic sensor detects that the current door state is 1, that is, opening of the door is taken as the trigger condition). The action configuration information includes a device sequence number, a channel sequence number, a channel type, and channel data. The action configuration is further divided into AO configuration and DO configuration according to different channel types. When the channel type is AO, the user presets the analogy output. The action represents that the preset analogy output control is sent to the AO channel of the specified device (for example, the set temperature value 28 degrees Celsius is delivered as a preset value to the AO channel defined by the temperature controller).

When the channel type is DO, the user selects the preset digital output (already defined in the device type configuration file), and at this time, the action represents that the preset digital output control to be delivered to the DO channel of the specified device.

### 5. Description of an execution process of the linkage control rule

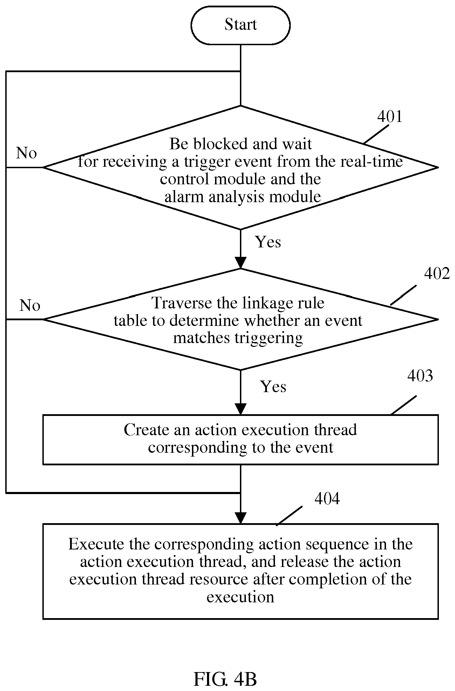

The execution path of the linkage control policy (i.e., the linkage control rule) involves each protocol conversion module of the device access unit, and the monitoring service module of the data processing unit. The linkage control policy is completed by the linkage control service sub-module in the monitoring service module. FIG. 4B is a flowchart illustrating execution of a linkage control service sub-module according to the embodiment 4. As shown in FIG. 4B, the execution process includes the steps described below.

In a step 401, the linkage control service sub-module determines whether a trigger event transmitted by the real-time control module or the alarm analysis module is received.

The linkage control service sub-module is normally in a blocked and waiting state.

In a step 402, when the linkage control service sub-module receives the trigger event transmitted by the real-time control module and the alarm analysis module, the linkage rule table is traversed according to the received event information (e.g., the state change of a certain channel of a certain device) and determine whether the trigger event matches the trigger condition stored in the linkage rule table.

The step 402 includes: determining whether the device sequence number in the trigger event received by the linkage control service sub-module matches the device ID in the trigger condition. When the device sequence number in the trigger event received by the linkage control service sub-module matches the device ID in the trigger condition, it is determined whether the channel sequence number in the trigger event received by the linkage control service sub-module matches the channel ID in the trigger condition. When the channel sequence number in the trigger event received by the linkage control service sub-module matches the channel ID in the trigger condition, it is determined whether the channel data in the trigger event received by the linkage control service sub-module matches the preset state. When the channel data in the trigger event received by the linkage control service sub-module matches the preset state, the trigger event received by the linkage control service sub-module matches the trigger condition stored in the linkage rule table.

In a step 403, when the trigger event received by the linkage control service sub-module matches the trigger condition stored in the linkage rule table, the linkage control service sub-module creates an action execution thread.

In a step 404, the linkage control service sub-module completes the corresponding action sequence execution process in the action execution thread. When the execution process returns normally or abnormally, and the action execution thread resource is released at the same time.

When multiple trigger events respond at the same time, the linkage control service sub-module creates multiple corresponding action execution threads at the same time to concurrently process the corresponding action sequences.

### 6. Description of the implementation flow of the linkage control method for an Internet of Things gateway in conjunction with the use scenario

The software development kit (SDK) software packet provided in the embodiment of the present application may run on any wireless router product based on the Linux operating system. The product of the embodiment of the present application may be applied to the field related to the Internet of Things, such as smart home, smart agriculture, smart transportation, and the like. The following describes the linkage control method for an Internet of Things gateway by using a smart home as an example.

For example, an Internet of Things gateway, an air box, an air conditioner, and several Zigbee security sensors such as infrared sensor, temperature and humidity sensor, and door's magnetic sensor are in the application environment. The operation and use steps for a user are as follows.

The user turns on the power switch of the Internet of Things gateway. The Internet of Things gateway performs dial-up and networking processes, performs the registration process, login process and the like to the Machine to Machine (M2M) cloud server, and finally establishes a connection with the cloud server.

The user turns on and runs the smart home APP on the mobile phone.

The user turns on the power supply of the home appliance and the power supply of the sensor, and performs the network-loading operations of the corresponding home appliance and the sensor according to the device network-loading operation prompts. In this case, the smart home APP may display detailed information of the device and the sensor that are connected to the network.

In addition to the commonly used linkage rule that is preset at the factory, the user can customize the linkage rule by using the APP, that is, configure the condition and the action of the linkage trigger. For example, the infrared sensor may be associated with the air conditioner, and when a person is detected by the infrared sensor in a bedroom, the air conditioner is turned on and set to a preset temperature.

After the above steps are completed and when the Internet of Things gateway detects any linkage trigger event, the linkage control service sub-module traverses the linkage rule table. When the linkage trigger event matches the trigger condition in the linkage rule table, the Internet of Things gateway executes a corresponding action.

The user scenario embodiment implements the linkage between the security sensor of the Zigbee network and the home appliance device supporting the Wi-Fi network. The SDK may be generalized to other industry application scenarios.

By implementing the embodiment of the present application, the user can achieve the linkage control between different channels of the same device and linkage control between input channel and output channel of different devices in the same network, and implement the linkage control between different devices in various heterogeneous networks. The Internet of Things gateway linkage control system provided in the embodiment has good universality and practicality. Moreover, the linkage control policy service in the embodiment of the present application adopts the asynchronous event response and the real-time concurrent processing technologies, the control has a strong real-time property, and is very suitable for smart homes, industrial control and other occasions that have high requirements on real-time control property.

### Embodiment 5

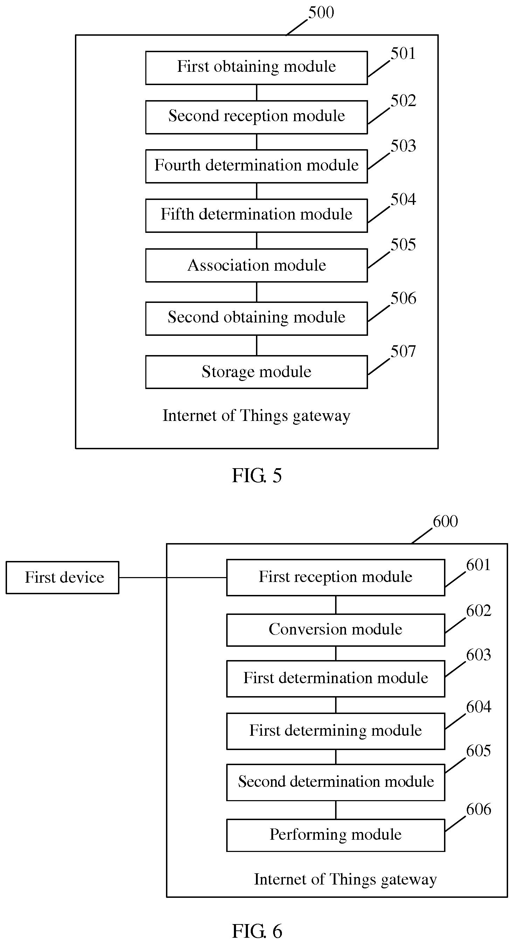

The embodiment of the present application provides an Internet of Things gateway. FIG. 5 is a structural diagram of the Internet of Things gateway according to the embodiment 5. As shown in FIG. 5, the Internet of Things gateway 500 includes a first obtaining module 501, a second reception module 502, a fourth determination module 503, a fifth determination module 504, an association module 505, a second obtaining module 506, and a storage module 507.

The first obtaining module 501 is configured to obtain device information of each device connected to the Internet of Things gateway.

The second reception module 502 is configured to receive a first operation and a second operation performed by a user based on the device information. The first operation is used for determining a channel sequence number of a first channel and channel data of the first channel, and the second operation is used for determining a channel sequence number of a second channel and channel data of the second channel.

The fourth determination module 503 is configured to determine a trigger condition according to the channel sequence number of the first channel and the channel data of the first channel.

The fifth determination module 504 is configured to determine an action according to the channel sequence number of the second channel and the channel data of the second channel.

The association module 505 is configured to associate the trigger condition and the action to obtain a linkage rule.

The second obtaining module 506 is configured to obtain the linkage rule. The linkage rule includes the trigger condition and the action corresponding to the trigger condition.

The storage module 507 is configured to store the linkage rule in a linkage rule table.

It is to be noted that the above description of the Internet of Things gateway embodiment is similar to the above description of the method embodiment, and has similar beneficial effects as the method embodiment, which will not be repeated here. For the technical details not disclosed in the Internet of Things gateway embodiment of the present application, please understand the technical details with reference to the description of the method embodiment of the present application. In order to save space, what has been described will not be repeated herein.

### Embodiment 6

According to the foregoing embodiment, the embodiment of the present application provides another Internet of Things gateway. FIG. 6 is a structural diagram of the Internet of Things gateway according to the embodiment 6. As shown in FIG. 6, the Internet of Things gateway 600 includes a first reception module 601, a conversion module 602, a first determination module 603, a first determining module 604, a second determination module 605, and a performing module 606.

The first reception module 601 is configured to receive first data transmitted by a first device connected to the Internet of Things gateway.

The conversion module 602 is configured to convert the first data according to a predefined data structure format to obtain second data. The second data at least includes attribute information of a first channel of the first device and device attribute information of the first device.

The first determination module 603 is configured to determine the attribute information of the first channel of the first device connected to the Internet of Things gateway.

The first determining module 604 is configured to determine whether the attribute information of the first channel satisfies a trigger condition in a preset linkage rule.

The trigger condition is used for determining whether to execute the action corresponding to the trigger condition in the preset linkage rule.

Alternatively, the first determining module 604 includes: a first determining unit and a second determining unit.

The first determining unit is configured to determine whether the device attribute information matches device attribute information in the trigger condition.

The second determining unit is configured to: if the device attribute information matches the trigger condition, determine whether the attribute information of the first channel matches channel attribute information in the trigger condition.

The device attribute information at least includes a device identification sequence number, and correspondingly, the first determining unit includes a first determining sub-unit, which is configured to determine whether the device identification sequence number in the device attribute information is the same as a device identification sequence number in the trigger condition.

The attribute information of the first channel at least includes a channel sequence number and channel data, and correspondingly, the second determining unit includes a second determining sub-unit and a third determining sub-unit.

The second determining sub-unit is configured to: if the device identification sequence number in the device attribute information is the same as the device identification sequence number in the trigger condition, determine whether the channel sequence number in the attribute information of the first channel is the same as a channel sequence number in the trigger condition.

The third determining sub-unit is configured to: if the channel sequence number in the attribute information of the first channel is the same as the channel sequence number in the trigger condition, determine whether the channel data in the attribute information of the first channel matches preset data in the trigger condition. When the channel data in the attribute information of the first channel in the second data matches the preset data in the trigger condition, it is indicated that the attribute information of the first channel in the second data matches the trigger condition.

The second determination module 605 is configured to: if the attribute information of the first channel satisfies the trigger condition, determine attribute information of a second channel corresponding to the first channel according to the preset linkage rule. The second channel includes a second channel in the first device or a second channel of a second device.

The performing module 606 is configured to control the first device or the second device determined according to the attribute information of the second channel to execute the action corresponding to the trigger condition.

The performing module 606 includes a first determination unit and a transmission unit.

The first determination unit is configured to determine, according to the attribute information of the second channel, a control instruction for performing the linkage action.

The transmission unit is configured to transmit the control instruction to the first device or the second device corresponding to the second channel.

Description of the above Internet of Things gateway embodiment is similar to description of the above method embodiment, and the Internet of Things gateway embodiment has similar beneficial effects as the method embodiment, which will not be repeated herein. For the technical details not disclosed in the Internet of Things gateway embodiment of the present application, reference may be made to the description of the method embodiment of the present application for understanding, and the technical details will not be repeated herein.

The embodiments of the present application may be provided as methods, systems or computer program products. Therefore, the present application can take the form of a hardware embodiment, a software embodiment, or a combination of software and hardware embodiments. In addition, the present application may take the form of a computer program product implemented on one or more computer-usable storage media (including, but not limited to, a disk memory and an optical memory) that includes computer-usable program codes.

The present application is described with reference to flowcharts and/or block diagrams of methods, devices (systems) and computer program products according to the embodiments of the present application. It should be understood that computer program instructions may implement each flow and/or block in the flowcharts and/or block diagrams and a combination of flows and/or blocks in the flowcharts and/or block diagrams. These computer program instructions may be provided to a general-purpose computer, a special-purpose computer, an embedded processor or a processor of another programmable data processing device to produce a machine so that instructions executed by a computer or the processor of another programmable data processing device produce a means for implementing functions specified in one or more flows in the flowcharts and/or one or more blocks in the block diagrams.

These computer program instructions may also be stored in a computer-readable memory which may direct the computer or another programmable data processing device to operate in a particular manner so that the instructions stored in the computer-readable memory produce a manufactured product including an instructing means. The instructing means implements the functions specified in one or more flows in the flowcharts and/or one or more blocks in the block diagrams.

These computer program instructions may also be loaded onto the computer or another programmable data processing device so that a series of operation steps are performed on the computer or another programmable device to produce processing implemented by the computer. Therefore, instructions executed on the computer or another programmable device provide steps for implementing the functions specified in one or more flows in the flowcharts and/or one or more blocks in the block diagrams.

### Embodiment 7

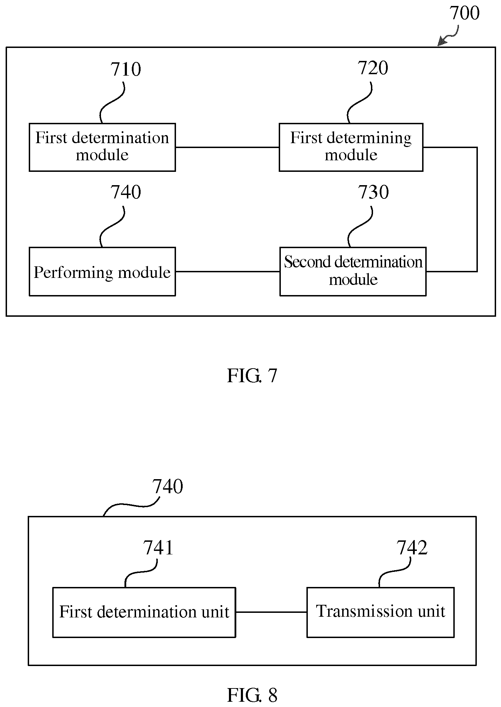

Referring to FIG. 7, the embodiment of the present application provides an Internet of Things gateway 700. The Internet of Things gateway 700 includes a first determination module 710, a first determining module 720, a second determination module 730, and a performing module 740.

The first determination module 710 is configured to determine attribute information of a first channel of a first device connected to the Internet of Things gateway.

The first determining module 720 is configured to determine whether the attribute information of the first channel satisfies a trigger condition in a preset linkage rule.

The second determination module 730 is configured to: when the attribute information of the first channel satisfies the trigger condition, determine attribute information of a second channel corresponding to the first channel according to the preset linkage rule. The second channel includes a second channel in the first device or a second channel of a second device.

The performing module 740 is configured to control the first device or the second device determined according to the attribute information of the second channel to execute an action corresponding to the trigger condition.

The embodiment of the present application provides an Internet of Things gateway. The attribute information of the first channel of the first device connected to the Internet of Things gateway is determined. Then it is determined whether the attribute information of the first channel satisfies the trigger condition in the preset linkage rule. When the attribute information of the first channel satisfies the trigger condition, the attribute information of the second channel corresponding to the first channel is determined according to the preset linkage rule. The first device or the second device determined according to the attribute information of the second channel is controlled to execute the action corresponding to the trigger condition. The Internet of Things gateway can not only achieve the linkage control between different channels of the same device and the linkage control between input channel and output channel of different devices in the same network, but also can achieve the linkage control between input channel and output channel of different devices in various heterogeneous networks.

Alternatively, referring to FIG. 8, the performing module 740 includes a first determination unit 741 and a transmission unit 742.

The first determination unit 741 is configured to determine, according to the attribute information of the second channel, a control instruction for performing the linkage action.

The transmission unit 742 is configured to transmit the control instruction to the first device or the second device corresponding to the second channel.

The trigger condition is used for determining whether to execute the action corresponding to the trigger condition in the preset linkage rule.

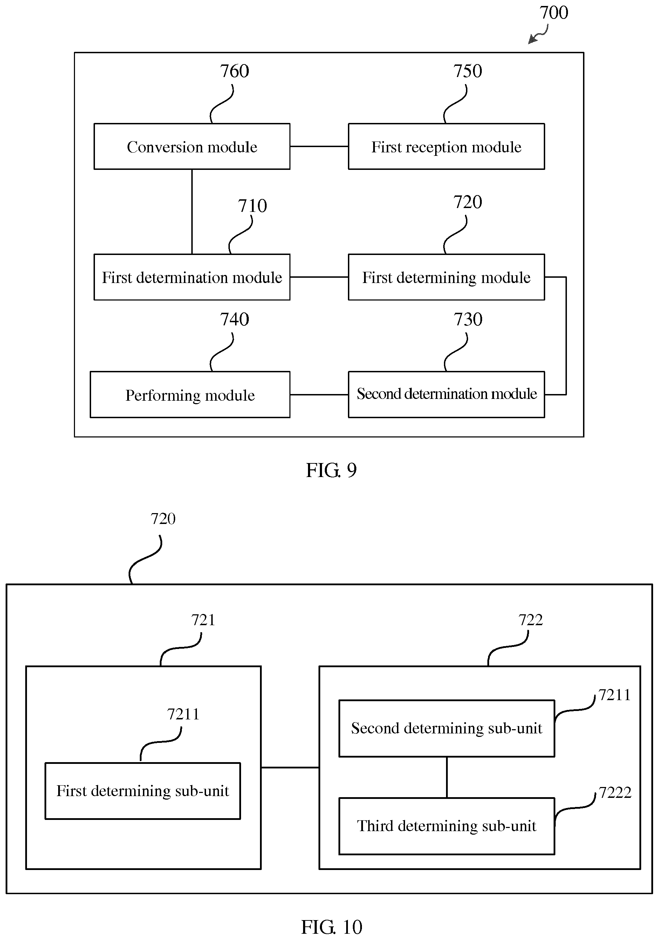

Alternatively, referring to FIG. 9, the Internet of Things gateway 700 further includes a first reception module 750 and a conversion module 760.

The first reception module 750 is configured to: before the step of determining the attribute information of the first channel of the first device connected to the Internet of Things gateway, receive first data transmitted by the first device connected to the Internet of Things gateway.

The conversion module 760 is configured to convert the first data into second data according to a predefined data structure format. The second data at least includes the attribute information of the first channel of the first device.

Alternatively, referring to FIG. 10, the second data further includes device attribute information of the first device, and the first determining module 720 includes a first determining unit 721 and a second determining unit 722.

The first determining unit 721 is configured to determine whether the device attribute information matches device attribute information in the trigger condition.

The second determining unit 722 is configured to: when the device attribute information matches the trigger condition, determine whether the attribute information of the first channel matches channel attribute information in the trigger condition.

Alternatively, with continued reference to FIG. 10, the device attribute information at least includes a device identification sequence number, and the first determining unit 721 includes a first determining sub-unit 7211.

The first determining sub-unit 7211 is configured to determine whether the device identification sequence number in the device attribute information is the same as a device identification sequence number in the trigger condition.

Alternatively, with continued reference to FIG. 10, the attribute information of the first channel at least includes a channel sequence number and channel data, and the second determining unit 722 includes a second determining sub-unit 7221 and a third determining sub-unit 7222.

The second determining sub-unit 7221 is configured to determine whether the channel sequence number in the attribute information of the first channel is the same as a channel sequence number in the trigger condition.

The third determining sub-unit 7222 is configured to: when the channel sequence number in the attribute information of the first channel is the same as the channel sequence number in the trigger condition, determine whether the channel data in the attribute information of the first channel matches preset data in the trigger condition. When the channel data in the attribute information of the first channel in the second data matches the preset data in the trigger condition, it is indicated that the attribute information of the first channel in the second data matches the trigger condition.

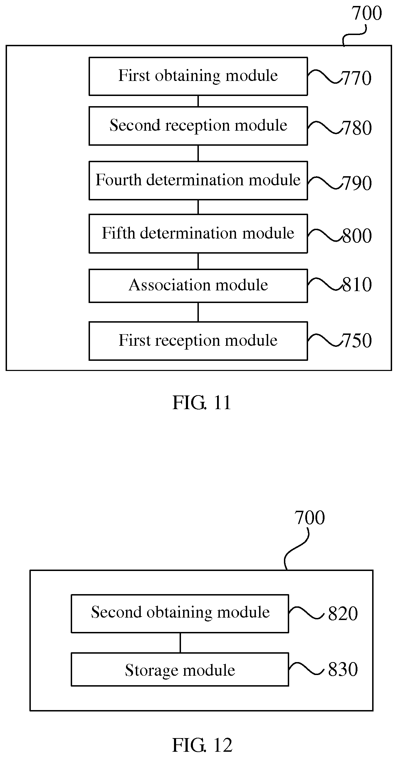

Alternatively, referring to FIG. 11, the Internet of Things gateway 700 further includes a first obtaining module 770, a second reception module 780, a fourth determination module 790, a fifth determination module 800 and an association module 810.

The first obtaining module 770 is configured to: before the step of receiving the first data transmitted by the first device connected to the Internet of Things gateway, obtain device information of each device connected to the Internet of Things gateway.

The second reception module 780 is configured to receive a first operation and a second operation performed by a user based on the device information. The first operation is used for determining the channel sequence number of the first channel and channel data of the first channel, and the second operation is used for determining a channel sequence number of the second channel and channel data of the second channel.

The fourth determination module 790 is configured to determine the trigger condition according to the channel sequence number of the first channel and the channel data of the first channel.

The fifth determination module 800 is configured to determine the action according to the channel sequence number of the second channel and the channel data of the second channel.

The association module 810 is configured to associate the trigger condition and the action to obtain the linkage rule.

Alternatively, referring to FIG. 12, the Internet of Things gateway 700 further includes a second obtaining module 820 and a storage module 830.

The second obtaining module 820 is configured to obtain the linkage rule. The linkage rule includes the trigger condition and the action corresponding to the trigger condition.

The storage module 830 is configured to store the linkage rule in a linkage rule table.

The embodiment further provides a computer-readable storage medium storing computer-executable instructions for executing the method described above.

### Embodiment 8

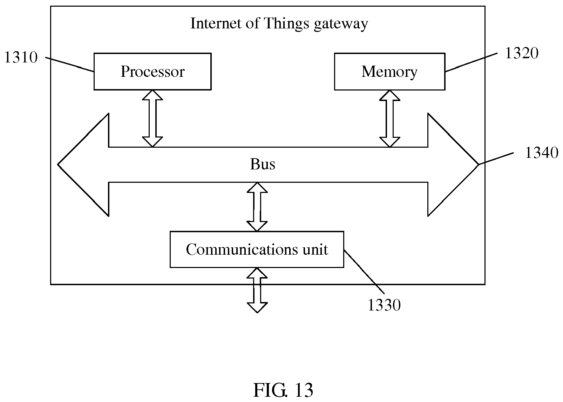

FIG. 13 is a structural diagram of hardware of an Internet of Things gateway according to the embodiment 8. As shown in FIG. 13, the Internet of Things gateway includes a processor 1310 and a memory 1320, and may further include a communications unit 1330 and a bus 1340.

The processor 1310, the memory 1320 and the communications unit 1330 may communicate with each other via the bus 1340. The communications unit 1330 may be used for information transmission. The processor 1310 may execute logic instructions in the memory 1320 to perform any method described in the above-mentioned embodiments.

The memory 1320 may include a program storage region and a data storage region. The program storage region may store an operating system and an application program required by at least one function. The data storage region may store data created in the operation of the Internet of Things and the like. In addition, the memory may include a volatile memory, such as a random access memory (RAM), and may also include a nonvolatile memory, such as at least one dick memory, a flash memory, or include other nonvolatile solid-state memories.

In addition, the logic instructions in the memory 1320 may be implemented in the form of a software functional unit and, when sold or used as an independent product, may be stored in a computer-readable storage medium. The technical solutions provided by the present invention may be embodied in the form of a computer software product. The computer software product may be stored in a storage medium and includes several instructions for enabling a computer device (which may be a personal computer, a server, a network device, or the like) to execute all or part of the steps in the methods according to the embodiments of the present invention.

The storage medium may be a non-transient storage medium, or may also be a transient storage medium. The non-transient storage medium may include: a USB flash disk, a mobile hard disk, a read-only memory (ROM), a random access memory (RAM), a magnetic disk, an optical disk, or another medium capable of storing program codes.

### INDUSTRIAL APPLICABILITY

The present invention provides a linkage control method for an Internet of Things gateway and an Internet of Things gateway, which can not only achieve the linkage control between different channels of the same device and the linkage control between input channel and output channel of different devices in the same network, but also achieve the linkage control between input channel and output channel of different devices in various heterogeneous networks.

## Claims

1. A linkage control method executed by an Internet of Things gateway, comprising:
determining attribute information of a first channel of a first device connected to the Internet of Things gateway;
determining whether the attribute information of the first channel satisfies a trigger condition in a preset linkage rule;
upon determining the attribute information of the first channel satisfies the trigger condition, determining, according to the preset linkage rule, attribute information of a second channel corresponding to the first channel, wherein the second channel comprises a second channel in the first device or a second channel of a second device; and
controlling the first device or the second device determined according to the attribute information of the second channel to execute an action corresponding to the trigger condition.

2. The method of claim 1, wherein the step of controlling the first device or the second device determined according to the attribute information of the second channel to execute the action corresponding to the trigger condition comprising:
determining, according to the attribute information of the second channel, a control instruction for performing the action; and
transmitting the control instruction to the first device or the second device corresponding to the second channel so that the control instruction is executed;
wherein the trigger condition is used for determining whether to execute the action corresponding to the trigger condition in the preset linkage rule.

3. The method of claim 1, wherein before the step of determining the attribute information of the first channel of the first device connected to the Internet of Things gateway, the method further comprises:
receiving first data transmitted by the first device connected to the Internet of Things gateway; and
converting the first data to second data according to a predefined data structure format, wherein the second data at least comprises the attribute information of the first channel of the first device.

4. The method of claim 3, wherein the second data further comprises device attribute information of the first device; and the step of determining whether the attribute information of the first channel satisfies the trigger condition in the preset linkage rule comprises:
determining whether the device attribute information matches device attribute information in the trigger condition; and
in a case of the device attribute information matching the device attribute information in the trigger condition, determining whether the attribute information of the first channel matches channel attribute information in the trigger condition.

5. The method of claim 4, wherein the device attribute information at least comprises a device identification sequence number, and the step of determining whether the device attribute information matches the device attribute information in the trigger condition comprises:
determining whether the device identification sequence number in the device attribute information is the same as a device identification sequence number in the trigger condition.

6. The method of claim 4 or 5, wherein the attribute information of the first channel at least comprises a channel sequence number and channel data, and the step of determining whether the attribute information of the first channel matches the channel attribute information in the trigger condition comprises:
determining whether the channel sequence number in the attribute information of the first channel is the same as a channel sequence number in the trigger condition; and
upon determining that the channel sequence number in the attribute information of the first channel is the same as the channel sequence number in the trigger condition, determining whether the channel data in the attribute information of the first channel matches preset data in the trigger condition, wherein when the channel data in the attribute information of the first channel in the second data matches the preset data in the trigger condition, it is indicated that the attribute information of the first channel in the second data matches the trigger condition.

7. The method of claim 3, wherein before the step of receiving the first data transmitted by the first device connected to the Internet of Things gateway, the method further comprises:
obtaining device information of each device connected to the Internet of Things gateway;
receiving a first operation and a second operation performed by a user based on the device information, wherein the first operation is used for determining a channel sequence number of the first channel and channel data of the first channel, and the second operation is used for determining a channel sequence number of the second channel and channel data of the second channel;
determining the trigger condition according to the channel sequence number of the first channel and the channel data of the first channel;
determining the action according to the channel sequence number of the second channel and the channel data of the second channel; and
associating the trigger condition and the action to obtain the linkage rule.

8. The method of any one of claims 1 to 7, further comprising:
obtaining the linkage rule, wherein the linkage rule comprises the trigger condition and the action corresponding to the trigger condition; and
storing the linkage rule in a linkage rule table.

9. An Internet of Things gateway, comprising:
a first determination module, configured to determine attribute information of a first channel of a first device connected to an Internet of Things gateway;
a first determining module, configured to determine whether the attribute information of the first channel satisfies a trigger condition in a preset linkage rule;
a second determination module, configured to: upon determining that the attribute information of the first channel satisfies the trigger condition, determine, according to the preset linkage rule, attribute information of a second channel corresponding to the first channel, wherein the second channel comprises a second channel in the first device or a second channel of a second device; and
a performing module, configured to control the first device or the second device determined according to the attribute information of the second channel to execute an action corresponding to the trigger condition.

10. The Internet of Things gateway of claim 9, wherein the performing module comprises:
a first determination unit, configured to determine, according to the attribute information of the second channel, a control instruction of performing the linkage action; and
a transmission unit, configured to transmit the control instruction to the first device or the second device corresponding to the second channel;
wherein the trigger condition is used for determining whether to execute the action corresponding to the trigger condition in the preset linkage rule.

11. The Internet of Things gateway of claim 9, further comprising:
a first reception module, configured to: before the step of determining the attribute information of the first channel of the first device connected to the Internet of Things gateway, receive first data transmitted by the first device connected to the Internet of Things gateway; and
a conversion module, configured to convert the first data according to a predefined data structure format to obtain second data, wherein the second data at least comprises the attribute information of the first channel of the first device.

12. The Internet of Things gateway of claim 11, wherein the second data further comprises device attribute information of the first device, and the first determining module comprises:
a first determining unit, configured to determine whether the device attribute information matches device attribute information in the trigger condition; and
a second determining unit, configured to: when the device attribute information matches the trigger condition, determine whether the attribute information of the first channel matches channel attribute information in the trigger condition.

13. The Internet of Things gateway of claim 12, wherein the device attribute information at least comprises a device identification sequence number, and the first determining unit comprises:
a first determining sub-unit, configured to determine whether the device identification sequence number in the device attribute information is the same as a device identification sequence number in the trigger condition.

14. The Internet of Things gateway of claim 12 or 13, wherein the attribute information of the first channel at least comprises a channel sequence number and channel data, and the second determining unit comprises:
a second determining sub-unit, configured to determine whether the channel sequence number in the attribute information of the first channel is the same as a channel sequence number in the trigger condition; and
a third determining sub-unit, configured to: when the channel sequence number in the attribute information of the first channel is the same as the channel sequence number in the trigger condition, determine whether the channel data in the attribute information of the first channel matches preset data in the trigger condition, wherein when the channel data in the attribute information of the first channel in the second data matches the preset data in the trigger condition, it is indicated that the attribute information of the first channel in the second data matches the trigger condition.

15. The Internet of Things gateway of claim 11, further comprising:
a first obtaining module, configured to: before the step of receiving the first data transmitted by the first device connected to the Internet of Things gateway, obtain device information of each device connected to the Internet of Things gateway;
a second reception module, configured to receive a first operation and a second operation performed by a user based on the device information, wherein the first operation is used for determining a channel sequence number of the first channel and channel data of the first channel and the second operation is used for determining a channel sequence number of the second channel and channel data of the second channel;
a fourth determination module, configured to determine the trigger condition according to the channel sequence number of the first channel and the channel data of the first channel;
a fifth determination module, configured to determine the action according to the channel sequence number of the second channel and the channel data of the second channel; and
an association module, configured to associate the trigger condition and the action to obtain the linkage rule.

16. The Internet of Things gateway of any one of claims 9 to 15, further comprising:
a second obtaining module, configured to obtain the linkage rule, wherein the linkage rule comprises the trigger condition and the action corresponding to the trigger condition; and
a storage module, configured to store the linkage rule in a linkage rule table.

17. A computer-readable storage medium, storing computer-executable instructions for executing the method of any one of claims 1 to 8.
